# EUROPEAN PATENT APPLICATION

(11) **EP 4 467 380 A1**
(43) Date of publication of application: **27.11.2024**
(21) Application number: 24161413.0
(22) Date of filing: 05.03.2024
(51) Int. Cl.: B60L 7/10, B60L 15/20

(54) **A TRAILER**

(30) Priority: 22.05.2023 FI 20235567
(71) Applicant: Vak Oy, 21310 Vahto (FI)
(72) Inventor: Laine, Juuso, 21310 Vahto (FI); Jokela, Teemu, 21250 Masku (FI); Saikkonen, Erno-Petteri, 20610 Turku (FI); Korhonen, Ilpo, 20100 Turku (FI); Keski-Sikkilä, Esko, 60200 Seinäjoki (FI); Remes, Joonas, 33410 Tampere (FI)
(74) Representative: Moosedog Oy

(57) **Abstract**

The invention concerns a method for controlling a truck (100, 200, 400), wherein the truck comprises a towing unit (104, 204) couplable to a trailer (102, 202), the method comprising: receiving a torque request to output a first amount of torque to a drive axle (106) from a first engine (108, 208); obtaining a resulting first amount of torque; selecting, as operational mode for an electric drive (112, 212), one of: (A) providing a second amount of torque to an assisting axle (110, 312), wherein the second amount of torque is determined based on a difference between the torque request and the resulting first amount of torque; (B) regenerating electricity from the assisting axle; or (C) setting the electric drive to an idle mode, wherein the electric drive is arranged to regenerate electricity from the assisting axle in at least one of following modes: uphill preparation mode (318, 410), downhill mode (408), coasting mode (406), and wherein start of the at least one of the modes is adjusted according to a coefficient of friction (µ) of a road. The invention also concerns a trailer.

## Description

### TECHNICAL FIELD

The present disclosure relates to trailers couplable to towing units. Moreover, the present disclosure relates to methods for controlling truck. Furthermore, the present disclosure relates to truck comprising computing systems for executing aforementioned methods.

### BACKGROUND

As the world grapples with the threat of climate change, there is growing recognition of the need to reduce greenhouse gas emissions from all sectors, including transportation. Heavy-duty transport, which includes trucks, buses, and other large commercial vehicles, is a significant contributor to emissions. As a result, governments around the world are tightening emission regulations, and the industry is seeking innovative solutions to reduce its impact on the environment.

To reduce pollution one approach is to limit the use of vehicles powered by internal combustion engines and instead employ electric vehicles powered by rechargeable batteries. However, such electric vehicles have very limited range, insufficient power for acceleration and hill climbing except when the batteries are substantially fully charged and require substantial time for battery recharging. Thus, while there are many circumstances in which the limited range and extended recharging time of the batteries would not be convenient.

Another solution is the use of electricity-recovering. These systems can significantly reduce emissions and improve fuel economy by recovering energy that would otherwise be lost during braking or by providing additional torque to the vehicle's wheels. However, the challenges in implementing these technologies are the weight and space required to accommodate the necessary components, such as batteries and electric motors. Moreover, cost of these systems is also significant.

In a vehicle, like a heavy-duty transport vehicle, the combustion engine or the combination of combustion engine and an electric motor is responsible for generating torque. Torque, in simple terms, is the force that causes rotation. It is the result of the engine's combustion process or the interaction of magnetic fields in an electric motor. This torque, or rotational force, is the fundamental element that sets the entire vehicle in motion.

In addition to electricity-recovering, there are other technologies being developed to reduce emissions in heavy-duty transport. These include alternative fuels such as biofuels and hydrogen. Alternative fuels such as biofuels and hydrogen can also reduce emissions in heavy-duty transport. However, cost of preparing of these fuels are expensive and the availability is also stagnant.

Therefore, in light of the foregoing discussion, there exists a need to overcome the aforementioned drawbacks.

### SUMMARY

The aim of the present disclosure is to provide a trailer, a method for controlling a truck and a truck comprising a computing system to improve fuel efficiency. The aim of the present disclosure is achieved by a trailer couplable to a towing unit, a method for controlling a truck and a truck comprising a computing system as defined in the appended independent claims to which reference is made to. Advantageous features are set out in the appended dependent claims.

Throughout the description and claims of this specification, the words "*comprise*"*,* "*include*"*,* "*have*"*,* and "*contain*" and variations of these words, for example "*comprising*" and "*comprises*"*,* mean "*including but not limited to*"*,* and do not exclude other components, items, integers or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

### BRIEF DESCRIPTION OF THE DRAWINGS

FIG. 1 is a schematic illustration of a trailer couplable to a towing unit, in accordance with an embodiment of the present disclosure;
FIG. 2 is a block diagram of a trailer couplable to a towing unit, in accordance with an embodiment of the present disclosure;
FIG. 3 is a schematic illustration of user interface located at a towing unit of a truck, in accordance with an embodiment of the present disclosure;
FIG. 4 shows a graphical representation of a route of a truck, in accordance with an embodiment of the present disclosure;
FIG. 5 shows a graph depicting various parameter of a first engine and an electric drive, in accordance with an embodiment of the present disclosure; and
FIG. 6 illustrates a flowchart of a method listing steps for controlling a truck, in accordance with an embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

In a first aspect, the present disclosure provides a trailer couplable to a towing unit, the towing unit comprising a first engine configured to output a first amount of torque to a drive axle based on a torque request,
the trailer comprising an electric drive to selectively: (i) provide a second amount of torque to an assisting axle, (ii) regenerate electricity from the assisting axle, or to (iii) be in an idle mode,
wherein the second amount of torque is determined based on a difference between the torque request and the first amount of torque, wherein the electric drive is arranged to regenerate electricity from the assisting axle in at least one of following modes: uphill preparation mode, downhill mode, coasting mode, and wherein start of at least one of the modes is adjusted according to a coefficient of friction (µ) of a road.

In the aforementioned first aspect an amount of fuel used for providing energy to the first engine is less as compared to conventional trailers coupled to conventional towing units. In other words, the assisting axle driven with the electric drive will help reduce fuel consumption. Herein, production of the second amount of torque enables effectively tackling at least one of: surfaces, inclinations, declinations of the road, while managing, like maintaining a speed and acceleration of the towing unit and the trailer. This is enabled synergistically by the electric drive comprised in the trailer, since it facilitates in providing the second amount of torque, which is crucial when climbing hills, as said second amount of torque helps counter an increased resistance caused by gravity. In addition, the electric drive provides additional torque needed when accelerating truck on the traffic. This is useful for example in congestion or when traffic lights change from red to green. Furthermore, the electric drive helps improve traction, specifically in slippery and uneven terrain, by proving more consistent force to the assisted axle. This helps prevent slipping of the trailer and ensures that the towing unit and the trailer for example maintain a steady pace. Moreover, the electric drive regenerates the electricity, which advantageously captures and stores energy that would otherwise be lost during deceleration. Beneficially, this stored energy can then be used to provide additional power during acceleration and/or when moving up the inclined surface of the hill.

In a second aspect, the present disclosure provides a method for controlling a truck wherein the truck comprises a towing unit couplable to a trailer, the method comprising:
receiving a torque request to output a first amount of torque to a drive axle from a first engine;
obtaining a resulting first amount of torque;
selecting, as operational mode for an electric drive, one of:
   (A) providing a second amount of torque to an assisting axle, wherein the second amount of torque is determined based on a difference between the torque request and the resulting first amount of torque;
   (B) regenerating electricity from the assisting axle; or
   (C) setting the electric drive to an idle mode,
wherein the electric drive is arranged to regenerate electricity from the assisting axle in at least one of following modes: uphill preparation mode, coasting mode, downhill mode, and wherein start of the at least one of the modes is adjusted according to a coefficient of friction (µ) of a road.

In the aforementioned second aspect, a total amount of torque provided by at least one of: the first amount of torque, the second amount of torque is essential for the truck to manage the speed and acceleration while climbing up the inclined surface of the hill or when accelerating, as said total amount of torque helps to counter the increased resistance caused by gravity. This is enabled synergistically by the aforementioned processing steps, since they facilitate in ensuring that the truck can effectively manoeuvre through driving situations. Additionally, the electric drive provides redundancy, which is beneficial in case the towing unit and/or the trailer experiences issues. This ensures that the truck functions efficiently even when the other motors coupled to the truck are not operating at full capacity. Furthermore, upon selection of a required operational mode, a power generated by the first engine is distributed across other motors of the towing unit and the electric drive, which helps reduce stress and workload on each individual motor and the electric drive. Beneficially, this results in reducing wear and tear, which extends a lifespan of the other motors and the electric drive, thereby improving an overall performance and reliability of the truck.

In a third aspect, the present disclosure provides a truck comprising a computing system for executing a method according to the second aspect.

In the aforementioned third aspect, the truck comprising the computing system that enhance the overall performance and fuel efficiency of the truck by utilizing data from the towing unit, the computing system can optimize the usage of the electric drive of the trailer, leading to improved fuel efficiency and reduced emissions. This can result in significant cost savings for fleet operators and help reduce the environmental impact of heavy-duty transport.

Moreover, the computing system in the truck provides real-time feedback and control over various aspects of the operation, such as engine performance, braking, and stability control. This can help drivers manage better control over the truck, resulting in improved safety and reduced risk of accidents. The computing system can also provide drivers with important information such as fuel consumption, tire pressure, and other diagnostic data. This can help prevent breakdowns and reduce downtime, resulting in improved productivity and cost savings. By providing insights into truck's performance and maintenance needs.

The trailer is a vehicle that is moved by the towing unit by way of towing, wherein the towing unit is another vehicle which guides the movement of the trailer. A combination of the trailer and the towing unit is typically referred as a truck. A type of trailer used depends on at least one of: an application, a weight of a load, a size of the load, a towing capacity of the towing unit, a legal requirement, a safety requirement. The trailer comprises at least one trailer wheel and the towing unit comprises at least one pair of drive wheels. Examples of the type of trailer may include, but are not limited to, a utility trailer, a cargo trailer, a flatbed trailer, a car carrier trailer, and a boat trailer. The trailer is mechanically coupled and/or electrically coupled to the towing unit. Examples of coupling may include, but are not limited to, a ball hitch mechanism, a pintle hitch mechanism, a fifth wheel hitch mechanism, a gooseneck coupler mechanism, a towing eye, and rings.

The first engine generates an energy by converting a fuel (for example, such as, diesel, petrol, biodiesel, petrol) that is necessary to propel the towing unit and provide a capability to tow the trailer. Furthermore, the generated energy is converted to a first amount of torque, wherein the torque is used to manage a speed and/or acceleration of the towing unit. In other words, the torque is a rotational force generated by the first engine, wherein the torque is applied to the at least one pair of drive wheel through a drivetrain, which is used to propel the towing unit (and consequently, the trailer) forward. Herein, the term "*drivetrain*" refers to at least one component that delivers power from the first engine to the at least one pair of drive wheel, to enable the towing unit to move. Examples of the first engine may include, but are not limited to, an internal combustion engine, an electric motor, and a compressed natural gas engine.

Throughout the present disclosure, the term "*torque request*" refers to a signal or a command indicative of an amount of torque required to at least one of: propel the towing unit, accelerate the towing unit, manage speed of the towing unit, tow the trailer, wherein the signal or the command is generated by at least one of: a control system of the towing unit, an input of a driver associated with the towing unit or a gas pedal of the towing unit. The drive axle receives the first amount of torque and distributes it to the at least one pair of drive wheels of the towing unit, wherein the drive axle connects the at least one pair of drive wheels. Herein, the first amount of torque generated by the first engine is applied to the drive axle that generates a force required to at least one of: propel the towing unit, accelerate the towing unit, manage speed of the towing unit, tow the trailer.

The electric drive utilizes at least one electric motor to control the trailer during different driving situations experienced by the towing unit. The trailer comprises the assisting axle, which is connected to the electric drive. The assisting axle can be connected to the electric drive for example via a gear system. In an embodiment, the assisting axle receives the second amount of torque generated by the electric drive. The second amount of torque is generated when the first amount of torque is inadequate in propelling the towing unit and the trailer based on the torque request. In other words, the second amount of torque is used to compensate for a slow change in the first amount of torque.

In another embodiment, based on a position of a brake pedal, when the brake pedal operated during braking and/or deceleration, the electric drive emulates an electric generator, and converts a rotational energy of the assisting axle to electrical energy. This electrical energy may be stored in a storage reservoir (for example, such as, a battery). A technical effect of regenerating electricity in such a manner is that a portion of the rotational energy that otherwise would have been dissipated as heat, is converted to the electrical energy, which is further used as electricity.

In yet another embodiment, the term "*idle mode*" refers to a state when the trailer is stationary or not actively moving. The electric drive is operated in such a manner that said electric drive any one of: reduces operation, deactivated when the second amount of torque is not received by the assisting axle. In other words, the electric drive operates at a reduced capacity or stops providing the second amount of torque to the assisting axle to minimize power consumption and extend an overall efficiency of the towing unit. Optionally, the electric drive transitions out of the idle mode when the driver associated with the towing unit engages a brake pedal or initiates a driving manoeuvre.

Optionally, the electric drive is adapted to provide the second amount of torque in at least one of following modes: an uphill mode, a downhill preparation mode, a dispatch mode. A technical effect of adapting the electric drive to provide the second amount of torque in at least one mode is that the power is distributed across the first engine and the electric drive, which beneficially reduces a stress and a workload on the first engine, thereby extending a lifespan of the first engine and improving an overall performance and reliability of the towing unit. Furthermore, the second amount of torque helps on acceleration of the towing unit and on climbing uphill.

The term "*uphill mode*" refers to a mode which activates the assisting axle when the towing unit is required to move up an elevated area (for example, such as an inclined surface of a hill), wherein an elevation angle of the elevated area is greater than a predetermined angle of elevation. In particular, the angle of elevation refers to the angle between a horizontal surface (such as the ground) and a line of sight or path of travel and is used to describe the steepness or slope of a road or hill. The predefined angle of elevation lies in a range from 0% up to 30%. Elevation angle of 30% refers to a road which has an elevation gain of 30 meters for every 100 meters of horizontal distance. Alternatively, the uphill mode is activated when a ratio of length and height of the elevated area is greater than a predetermined ratio. Herein, when the towing unit goes up the elevated area, said towing unit experiences a resistance due to gravity, which works against a forward motion of the towing unit. In this regard, to overcome the resistance, the electrical drive is configured to provide the second amount of torque to any one of: manage speed, accelerate. In an instance, when the elevation angle of the elevated area increases, based on the torque request, the second amount of torque is generated to manage the speed. In another instance, at least one gear is used to allow for different ratios of torque to speed. Herein, when the elevation angle of the elevated area increases, a low gear is used to provide to generate the second amount of torque. In another instance, the first engine may be a diesel engine, wherein the diesel engine produces the second amount of torque which is greater than the first amount of torque at low revolutions per minute of the assisted axle.

The term "*downhill preparation mode*" refers to a mode which activates when a downhill is expected to be along the road. For example when a declined surface of the hill is coming shortly such as after 1km, 2km, 5km or 10km. During the downhill preparation mode electricity from the battery is used to generate the second amount of torque. Indeed, the electric drive can be adapted to use all or almost all the electricity of the battery (storage reservoir) during the downhill preparation mode. This way, later when in actual downhill, battery will have sufficient capacity to store regeneratively electricity from the electric drive. Length and duration of the downhill preparation mode depends on how long downhill (vertical and horizontal) is expected.

The term "*dispatch mode*" refer to a mode of operation in which vehicle initially uses electric power from the battery of the electric drive to start moving, in conjunction with the first engine. In this regard, the dispatch mode is used to improve the energy efficiency of the vehicle, as the electric motor is more efficient at low speeds and can provide second amount of torque to move the vehicle. Moreover, in the dispatch mode it activates the assisting axle to assist electric drive in a crawl speed. Typically, the crawl speed is the measure of time by the vehicle to move a set distance. It is expressed as a numerical figure in feet per minute (fpm). Furthermore, the crawl speed allows the vehicle to move forward or backward at a very slow speed with the first engine operating at a relatively high RPM. Optionally, the dispatch mode may also be referred as move on mode.

The electric drive is arranged to regenerate electricity from the assisting axle in at least one of following modes: uphill preparation mode, downhill mode, coasting mode. In this regard, the regenerated electricity from the assisting axle can be used to provide the second amount of torque. In uphill preparation mode the electric drive is arranged to regenerate electricity from the assisting axle before the actual uphill. As an example the uphill preparation mode can be set (while truck is driving on even/flat surface) few km before actual uphill. As an example the uphill preparation mode can be set 1, 2, 3, 4, 5, 6, 7, 8, 9, 10, 15 or 20km before the uphill. Actual distance depends on amount of expected climb on when starting to climb the uphill, on regenerative power of the electric drive and capability of the battery to receive (charge) electricity. Technical effect of the uphill preparation mode is that batteries will be sufficiently charged before the actual uphill. This way the trailer will have sufficient energy for the electric drive provide the second amount of torque to the assisting axle to provide an extra boost of power to the truck unit to help towing unit when in actual uphill. In downhill mode, the electric drive recover energy. By using regenerative braking, the electric motor generates electricity as the vehicle slows down or when the acceleration of the vehicle is limited (to keep the speed constant in the downhill), which can be used to recharge the battery. In coasting mode, the vehicle is in motion, but the gear (of the first engine) is in neutral. In coasting mode we can harvest energy with the electric drive.

In general technical effect of regenerating electricity with the electric drive, which is connected to the assisting axle, is that there is no need to have a separate electricity generator, which is connected to the first engine. Indeed the first engine moves towing unit and thus the trailer. The assisting axle of the trailer can be set to regenerative mode when needed without any modifications to the first engine. In addition since the electric drive is configured to use same voltage when generating torque as is generated from the electric drive in regenerative mode there is no need to have complex power converters either in the system.

Optionally, the electric drive is in an idle mode when the brake pedal has been applied more than a predefined amount of movement or when a fail-safe mode has been activated manually or automatically. In said mode the electric drive is disconnected from the assisting axle. Term disconnected can refer to physical disconnection (via gear / clutch) or de-energizing the electric drive. A technical effect of the electric drive being in an idle mode is that the towing unit still functions and manages its speed, even when the electric drive is not operating at full capacity or is disconnected fully. Further effect of this is that in case of applying "emergency" breaking (i.e., fully pressing = more than predetermined amount of movement) we can ensure that electric drive does not have negative impact on the breaking. As an example, if one would use assisting axle to regenerate electricity also in the emergency breaking it might make trailer unstable. In further example hard braking overrides the regeneration of electricity.

It will be appreciated that the term "*fail-safe mode*" refers to a state in which the electric drive enters the idle mode when at least one of: a fault, a malfunction of at least one of: the assisting axle, the trailer is detected. Herein, the electric drive enters the idle mode by any one of: deactivating, reducing operation to prevent further damage or ensure safety of the towing unit. The fail-safe mode can be engaged automatically upon detection of at least one of: the fault, the malfunction of at least one of: the assisting axle by a processor communicably coupled to the towing unit, the electric drive, or manually by the driver associated with the towing unit.

Optionally, the fail-safe mode is activated by an Electronic Brake System (EBS). A technical effect of activated the fail-safe mode in such a manner is that EBS is engaged automatically based on a braking input of the driver and adjusts the application of the brake pedal based on requirement in a precise manner. It will be appreciated that the EBS uses electronic control technology comprising at least one of: an electronic control unit (ECU), at least one sensor, an antilock braking system (ABS), and a vehicle dynamic control (VDC). Herein, the ECU receives sensor data from the at least one sensor and processes said sensor data to perform at least one action on the brake pedals. The at least one action maybe: the light braking, the hard braking. Optionally, the at least one sensor comprises at least one of: an acceleration sensor, a brake pressure sensor, and a steering angle sensor. Moreover, the ABS prevents the at least one wheel of the trailer from locking up during engagement of the brake pedal, which facilitates the driver to manage a control on steering the towing unit during the hard braking or on slippery surfaces, wherein the ABS is engaged based on the sensor data. Furthermore, the VDC uses at least one another sensor to collect another sensor data indicative of a stability of the towing unit, wherein the VDC processes another sensor data to adjust the brake pedal for the at least one wheel during challenging driving conditions, for example, such as, evasive manoeuvres, curves.

Optionally, the fail-safe mode comprises an emergency stop function. Herein, the emergency stop function disconnects the mechanical coupling between the electric drive and the assisting axle, while the system shutdown and de-energizing happens programmatically. A technical effect of the emergency stop function is that when said emergency stop function is activated, the electric drive is immediately turned off and the electric drive stops receiving or generating any voltage.

Optionally, the selection of the mode is based on at least one of the following: a map data, a historical drive data, an actual drive data, a traffic data, a road condition data, or a weather data. A technical effect of selecting the mode in such a manner is that the towing unit is able to the use the electric drive in a required manner and provide the second amount of torque to the assisted axle upon requirement. The term "*map data*" refers to information that represents geographical features, for example, such as, roads, elevated area, terrain, water body, buildings, and similar, within a specific area or region. The term "*historical drive data*" refers to information regarding historical drive activities, which includes metrics related to at least one of: a performance, a behavioural, a navigation of the towing unit. The historical drive data comprises information regarding at least one of: a trip, a route data, a navigation data, a speed data, an acceleration data, and a fuel consumption data. The term "*actual drive data*" refers to information related to real time or near-real time driving activities of the towing unit. The actual drive data comprises information regarding at least one of: an actual speed data, an actual acceleration data, an actual deceleration data, and an actual geographical position. The term "*traffic data*" refers to information related to movement and behaviour of vehicles that enables to determine at least one of: a traffic pattern, a congestion level, and an overall transportation efficiency. The traffic data comprises information regarding at least one of: a traffic flow, a traffic volume, a time of travel, a congestion area, a congestion period, a yet another speed data. The term "*road condition data*" refers to information describing a state and quality of road, wherein said information comprises details related to a physical condition, a surface characteristic, and a potential hazard present on roads. The road condition data comprises information regarding at least one of: a pavement condition, a surface texture, a road obstacle, a road hazard, a road drainage condition. The term "*weather data*" refers to information that describe atmospheric conditions, weather, and climate over a particular region or an area. The weather data comprises information regarding at least one of: a temperature, a humidity, a precipitation, an atmospheric pressure, a visibility. Optionally, a format in which the at least one of: the map data, the historical drive data, the actual drive data, the traffic data, the road condition data, or the weather data is at least one of: a text, a table, a graph.

Optionally, for optimizing the truck/trailer energy (electrical energy use, fuel use) usage it might be possible to use the road network topography/route information, and the information can be obtained from separate (external source) data or from the map data of the truck/trailer. There can be a connection to the truck/trailer, to deliver information to and from the truck/trailer to the operator/driver of the truck/trailer. With optimizing the energy usage it is possible to lower the fuel consumption of the truck/trailer and get savings.

Optionally, optimizing the energy usage and/or limiting the power of truck/trailer might be based on weather conditions. For example, information about temperature, use of rain radar/wipers can be used, or practically any information from the truck, trailer or external data can be used. There might be different sensors in the truck/trailer which for example collect information about weather conditions or any other conditions associated with the truck/trailer or the environment where the truck/trailer operate or will be operated. With optimizing the energy usage by using for example mentioned weather conditions information it is possible to lower the fuel consumption of the truck/trailer and get savings.

Optionally, the towing unit comprises a fleet management system (FMS) which is an interface for data received by the towing unit, wherein the data comprises at least one of: the map data, the historical drive data, the actual drive data, the traffic data, the road condition data, or the weather data.

Optionally, the traffic data for example comprises congestion data, and the data about the upcoming congestion could be used for controlling energy use of the truck or trailer. For example, charging the battery of the truck/trailer before a rush hour (or changing the specified limits of the charge level), that is, allowing greater variability in the charge level.

Optionally, the at least one of: the map data, the historical drive data, the actual drive data, the traffic data, the road condition data, or the weather data is received by a controller area network (CAN) of the towing unit, so that the assisted axle is controlled in different driving situations. Such data is received from at least one of: a rotation speed of the driving axle, a position of the brake pedal, a position of the accelerator pedal, the first amount of torque, a status of gearbox.

Optionally, the selection of mode is performed on predetermined set of modes from user interface. Herein, the user interface is located at the towing unit. Herein, the term "*user interface*" refers to a structured set of user interface elements rendered on a display, wherein optionally, the structured set of user interface elements are interactive in nature. Optionally, the user interface is generated by any collection or set of instructions executable by any processor communicably coupled to the towing unit. A technical effect is that the user interface is operable to interact with the driver to convey graphical and/or textual information and receive input from the driver. Furthermore, the user interface elements refer to visual objects that have a size and position in the user interface and serve as a means of interacting with the driver with respect to selecting the mode. A given user interface element could be used to present/display an output, receive an input, or perform a combination of these. Text blocks, labels, text boxes, list boxes, lines, images windows, dialog boxes, frames, panels, menus, buttons, icons, statistical representations, and the like, are examples of user interface elements. In addition to size and position, the user interface element may have other properties, such as a margin, spacing, or the like.

Optionally, the button comprises at least one of: a main control button for turning the electric drive on or off, an automatic mode button, an uphill preparation button, a downhill preparation button, a steep hill assistance button, a dispatch assistance button. Optionally, a status of at least one of: the button, a battery, an inverter and a power distribution unit (PDU), a regeneration of electricity, the coasting mode, a main state machine, the insulation resistance is shown. As an example, the main control button may blink red light to denote that the electric drive is not ready and may show a steady green light to denote that the electric drive is ready, a level of charge in the battery may be shown by green colour, yellow colour, and red colour, a status of the inverter and the power distribution unit (PDU) may be shown by a green frame or a red frame, the regeneration of electricity is shown by green arrows, the insulation resistance status is shown by blinking red (i.e., the insulation resistance is not okay), showing orange (i.e., a resistance value of the insulation resistance is being measured), showing grey colour (i.e., the insulation resistance is okay). Optionally, at least one of: an event, an announcement, is shown on the user interface, wherein the at least one of: the event, the announcement is shown as a popup view. Optionally, an alarm is triggered when there is at least one of: a loss of connection of trailer data, a connection/disconnection of an onboard charger.

Optionally, the electric drive is connected to a battery, the battery having a capacity of 5 to 70 kWh. In an instance, when the electric drive is adapted to provide the second amount of torque in the uphill mode, the electricity of battery is used to climb the hill up. In another instance, when the electric drive is adapted to regenerate electricity in the downhill mode i.e., the battery is charged during driving downhill. In yet another instance, the electric drive provides motorization when the battery has a high charge, and electricity is not regenerated. In still another instance, the electric drive regenerates electricity when the battery has a low charge, and no assistance in motorization is allowed. When a level of the charge in battery is low during driving, the battery is charged in such a manner that the first amount of torque provided as output by the first engine is used in a fuel-efficient manner. The capacity of the battery lies in a range of 5, 10, 15, 20, 30 or 50 kWh to 25, 45, 55, 60, 65 or 70 kWh. Battery is typically installed in the trailer, for example below storage space of the trailer.

Optionally, the battery comprises at least one temperature-regulation channel, wherein the at least one temperature-regulation channel is used to regulate a temperature of the battery using a temperature-regulating fluid. Herein, a temperature of the temperature-regulating fluid is such that another temperature of the battery in the exchangeable battery module lies in a range of 25 degrees Celsius to 55 degrees Celsius. Herein, the temperature of the battery lies in a range of 25, 27, 30, 35, 40, or 50 degrees Celsius up to 30, 40, 45, 50, 53 or 55 degrees Celsius.

Optionally, wherein the battery is located in the trailer, and wherein the battery is formed as an exchangeable battery module. Herein, a size of the exchangeable battery module is determined based on a requirement of energy. A technical effect of forming the battery as the exchangeable battery module is that it provides flexibility for swapping battery, and eliminating a need for charging sessions of the battery which are time-consuming. Optionally, the battery can be charged with an external charger.

Optionally, the exchangeable battery module provides at least one of: a support frame, a protection to the battery. Optionally, the trailer comprises a temperature-regulation system which regulates temperature in a following order: the first engine, the electric drive, wherein the temperature-regulation system is coupled to the trailer. The temperature-regulation system comprises another temperature-regulating fluid, wherein the temperature-regulating fluid regulates a temperature of at least one of: the electric drive, the assisting axle. An exemplary temperature of another temperature-regulating fluid may be less than 60 degrees Celsius, and an exemplary flow rate may be 12 litres per minute. Additionally, the temperature-regulation system takes into account a space required and an intake of a required amount of air. Moreover, the temperature-regulation system is carried out in such a way that said temperature-regulation system is protected from mechanical stress. The temperature-regulation system is coupled to the trailer by using bolts and/or welding. In an instance, a portion of the temperature-regulation system may be coupled to a front end of the towing unit and a remaining portion of the temperature-regulation system may be coupled inside a frame of the trailer. In another instance, a portion of the temperature-regulation system may be coupled to a front end of the towing unit and a remaining portion of the temperature-regulation system may be coupled outside the frame on a right side of the trailer. As an example, the temperature-regulation system may be a radiator, wherein the temperature may be regulated in two separate temperature-regulation cycles.

Optionally, wherein the second amount of torque is in maximum less than a total braking force of the trailer. In this regard, the total braking force applied to the trailer is greater than the second amount of torque received as output from the electric drive. A technical effect of the second amount of torque in maximum being less than the total braking force of the trailer is that in case of malfunction the truck can be stopped. As an example, if the electric drive provides, due to malfunction (such as software problem), the second torque with maximum power, the truck can be stopped as the breaking force is larger than the force generated by the electric drive.

The present disclosure also related to the second aspect as described above. Various embodiments and variants disclosed above, with respect to the aforementioned first aspect, apply mutatis mutandis to the second aspect.

In a second aspect, the present disclosure provides a method for controlling a truck wherein the truck comprises a towing unit couplable to a trailer, the method comprising:
receiving a torque request to output a first amount of torque to a drive axle from a first engine. This torque request is typically a function of amount of movement of the gas pedal used by driver.

The received torque request will result to a first amount of torque which in turn moves the truck. Furthermore, the resulting first amount of torque is obtained.

Operational mode for an electric drive is selected to be, one of:
(A) providing a second amount of torque to an assisting axle, wherein the second amount of torque is determined based on a difference between the torque request and the resulting first amount of torque;
(B) regenerating electricity from the assisting axle; or (C) setting the electric drive to an idle mode.

Indeed, the second amount of torque is provided to fill the gap between the torque request and resulting torque. In that regard, for example, if towing unit is not able to fulfil the desired torque the second amount of torque is provided by an assisting axle. The assisting axle is powered, as discussed above, by the electric drive. The electric drive can be used also to generate electricity as discussed.

Optionally, the electric drive is adapted to provide the second amount of torque in at least one of following modes: uphill mode, downhill preparation mode, dispatch mode.

Optionally, the determination of the second amount of torque is further based on at least one of:
- the speed of the towing unit,
- the mass of the trailer and towing unit,
- the mode,
- the charge level of battery or
- the acceleration or deceleration of the towing unit.The electric drive is arranged to regenerate electricity from the assisting axle in at least one of following modes: uphill preparation mode, coasting mode, downhill mode.

Optionally, the electric drive is in an idle mode when the brake pedal has been applied more than a predefined amount of movement or when a fail-safe mode has been activated manually or automatically.

Optionally, modes are selectable via a user interface, wherein the user interface is located at the towing unit of the truck.

Optionally, selection of mode is based on at least one of the following: a map data, a historical drive data, an actual drive data, a traffic data, a road condition data or a weather data.

Optionally, an amount of electricity regenerated is adjusted according to a coefficient of friction (µ) of a road. It will be appreciated that the coefficient of friction is given by a ratio between a force that moves the truck and a frictional force which is directed towards an opposite direction of the force. In other words, the coefficient of friction (µ) is a measure of traction between the at least one of: at least one drive wheel, at least one wheel with a surface of the road. In an instance, when the coefficient of friction (µ) is high, i.e., when the surface of the road is dry and grippy, the electric drive is adjusted to regenerate electricity in its full capacity. In another instance, when the coefficient of friction (µ) is low, i.e., when the surface of the road is slippery, the electric drive is adjusted to regenerate less electricity in comparison to higher friction. A technical effect of adjusting the amount of electricity regenerated according to a coefficient of friction (µ) of the road is that the amount of electricity is regenerated while ensuring a safe and efficient operation of the truck, while taking into account conditions of traction of the road. As an example, maximum regenerative power of the electric drive can be 50kWh. If the friction of the road is high (such as µ>0.7) then, during the regeneration full 50kWh of regenerative power is drawn and stored in the battery. On the other hand, if the friction is low (such as µ<0.3) regeneration can be adjusted to 0 to avoid possible slipping of wheels of the assistant axis. When the friction is between 0.3 to 0.7 the regenerative power could be adjusted linearly as 0% at 0.3 to 100% at 0.7 (and for example if friction is 0.5 to 50% (0.3+0.7)/2 = 0.5).

A start of at least one of following modes: the uphill preparation mode, downhill mode, coasting mode is adjusted according to the coefficient of friction (µ) of a road.

As an example, for the uphill preparation mode, when the coefficient of friction (µ) is low, i.e., when the surface of the road is slippery, regeneration power is adjusted low and thus time required to charge batteries is longer. For this reason, the uphill preparation mode should be started earlier than in case of higher friction. In another instance, when the coefficient of friction (µ) is high, i.e., when the surface of the road is dry and grippy, the regeneration can be done with more power. For that reason, time (and distance) required to prepare for the uphill can be shorter than in low friction conditions. A technical effect of adjusting the start of the uphill preparation mode according to the coefficient of friction (µ) of a road is that the timing of starting of regeneration is adjusted in such a manner that a safe and efficient operation of the truck is ensured, while taking into account different conditions (i.e., slippery nature, elevation angle) which affects traction of the road. As an example, if friction is high (µ>0.7) uphill preparation mode start can be 5 km before the actual uphill. When friction is low (such as µ<0.5) uphill preparation start would be for example 10km before the actual uphill. When friction is between said values uphill preparation start would be adjusted accordingly. As an example, if friction is 0.6 preparation would start 7.5km before the uphill. Technical effect of this is that we can ensure sufficient amount of electricity in the batteries in different road conditions.

Indeed the electric drive can be arranged to regenerate electricity from the assisting axle in uphill preparation mode and wherein start of the uphill preparation mode is adjusted according to a coefficient of friction (µ) of a road.

For the downhill mode the start of the downhill mode refers to at which angle of the downhill the mode regeneration can be started. If friction is low, then the start is initiated only when the angle is low enough. On the other hand, if the friction is higher then angle of starting the downhill mode can be higher. In this regards the start of the downhill mode (for regenerating electricity) is adjusted according to a coefficient of friction (µ) of a road.

Further for coasting mode the start of the coasting mode refers to speed of the vehicle when the regeneration can be started in the coasting mode. If the friction is low, then regeneration can be started only when speed is low. On the other hand if the friction is high then the regeneration can be started at higher speeds. In this regards the start coasting mode (for regenerating electricity) is adjusted according to a coefficient of friction (µ) of a road.

Optionally, an automatic mode can be selected. In the automatic mode the regeneration of amount of electricity is adjusted according to a coefficient of friction (µ) of a road. Furthermore the selection of electricity generating mode is selected automatically in said automatic mode.

The present disclosure also related to the third aspect as described above. Various embodiments and variants disclosed above, with respect to the aforementioned second aspect, apply mutatis mutandis to the third aspect.

The term " *computing system*" as used herein refers to an electronic device associated with (or used by) a user, that is capable of enabling the user to execute specific tasks associated with the aforementioned method. Furthermore, the computing system is intended to be broadly interpreted to include any electronic device that may be used for providing the information to the truck by using data communication over a wired or wireless communication network. Examples of computing system include, but are not limited to, handheld devices, laptop computers, personal computers, and the like. Additionally, the computing system includes a display, a memory, a processor, a communication interface. Moreover, the computing system is configured to host the application programming interface (such as aforementioned user interface) thereon to support and/or enable the operation of the method. Specifically, the application programming interface logs in to display of the computing system to display a virtual system. The application programming interface enables sending commands to the electric drive to control the various modes, such as the uphill mode, downhill preparation mode, dispatch mode.

Optionally, the computing system may be used for monitoring the truck's performance, controlling various systems, providing navigation and communication services, and the like. Moreover, the computing system having the application programming interface may be operated as touchscreen display or by voice commands, to allow the user to interact with the computing system.

Optionally, the computing system is formed to the trailer. In this regard, the computing system is directly arranged in the trailer. The computing system enables the trailer to communicate and share data with other systems, such as a truck or a logistics management system. This can help to optimizing the operation of the trailer, increase efficiency. A technical effect of arranging the computing system with the trailer is that it helps to optimize the route, manage monitor the trailer.

Optionally, the computing system uses data received from the towing unit for computing and controlling the usage of the electric drive of the trailer. In this regard, the computing system used in the trailer to monitor and control the operation of the electric drive of the trailer. Herein, the computing system receives data from the towing unit, which it then used to make decisions to control the usage of the electric drive of the trailer. In an embodiment, the computing system may include sensors, processors, memory, storage, and networking module.

A technical effect of using data received from the computing system to help the towing unit to allow the electric drive system to be used in conjunction with the first engine to switch between electric and conventional modes of operation. For example, if the truck is accelerating quickly, the computing system may determine that more power is needed from the electric drive system to manage a constant speed. Conversely, if the truck is decelerating or braking, the computing system may determine that less power is needed from the electric drive system to avoid wasting energy.

Optionally, the friction data and/or data about weather conditions can be sent to into the truck/trailer operators' fleet (a fleet can comprise many trucks/trailers) management system. The trailer could also provide additional information about the behavior of the trailer, e.g. for example that the EBS (Electronic Brake System ) of the trailer/truck may not be activated but information may be sent from the trailer to the truck or operator of the truck.

### DETAILED DESCRIPTION OF THE DRAWINGS

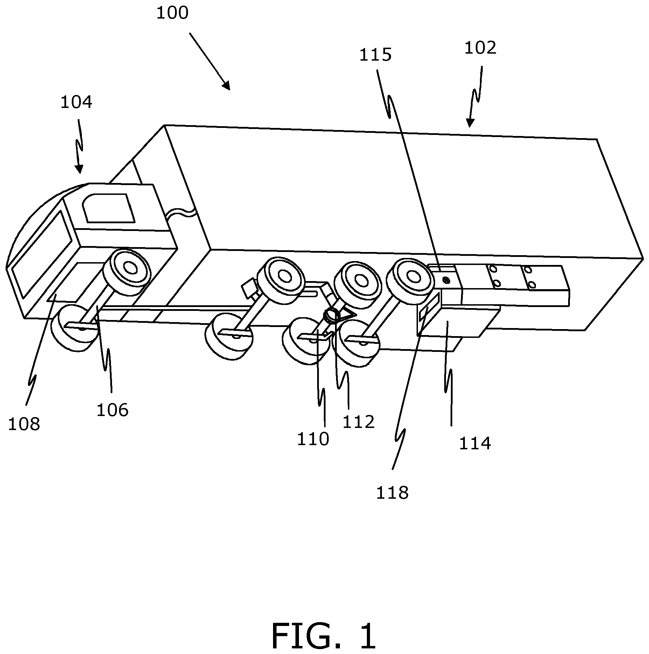

Referring to FIG. 1, illustrated is schematic illustration of a truck **100.** The truck **100** comprises a trailer **102** which is coupled to a towing unit **104,** in accordance with an embodiment of the present disclosure. As shown, the towing unit **104** comprises a first engine **108** configured to output a first amount of torque to a drive axle **106** based on a torque request. In this regard, when a driver has requested first amount of torque, the first engine **108** is configured to responds by sending that amount of torque to the drive axle **106.** The trailer **102** comprises an electric drive **112.** As shown, the electric drive **112** is arranged on a bottom side of the trailer **102** facing the ground. The electric drive **112** is configured to selectively provide a second amount of torque to an assisting axle **110,** regenerate electricity from the assisting axle **110,** or to be in an idle mode. Notably, the second amount of torque is determined based on a difference between the torque request and the first amount of torque. The electric drive **112** is connected to a battery **114.** Moreover, the battery **114** is located in the trailer **102,** and the battery can be modular and exchangeable. The trailer **102** further comprises a temperature-regulation system **115** configured to heat the battery **114** during low temperate and to cool the battery **114** if the temperature is high.

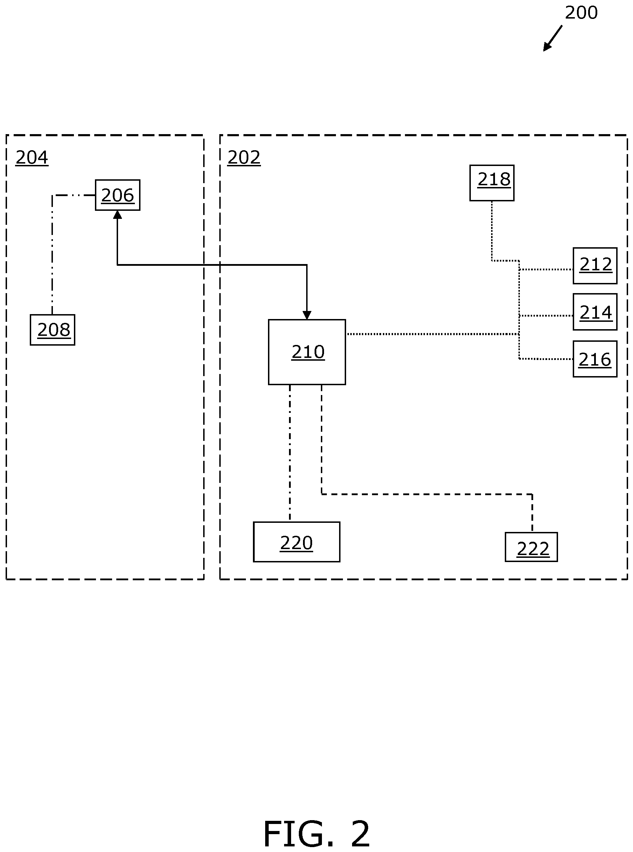

Referring to FIG. 2, illustrated is block diagram of a truck **200** in accordance with an embodiment of the present disclosure, The truck **200** comprises a trailer **202** which is coupled to a towing unit **204.** The towing unit comprises a first engine **208.** As shown, the towing unit **204** comprises a user interface **206** arranged within the towing unit **204.** The user interface **206** is configured to display the information related to operation of the trailer **202** and the towing unit **204** and respective operational components of. The user interface **206** is operably coupled to a control unit (or in other words a computing system) **210.**

The control unit **210** is coupled with an electric drive **212** of the trailer **202.** The electric drive **212** is electrically connected to a battery **214.** Electric drive **212** is further coupled to the control unit **210.** The control unit **210** is further coupled to a clutch unit **216** operatively coupled with the electric drive **212** to engage and disengage power from thereof. The electric drive **212** further provides regenerative power to an inverter **218** to charge the battery **214.** The electric drive **212** is further coupled to a braking system **220** of the trailer **202** to stop the torque from the electric drive **212.** The control unit **210** is coupled to temperature-regulation system **222** to heat the battery **214** when required and to cool or heat the battery **214.**

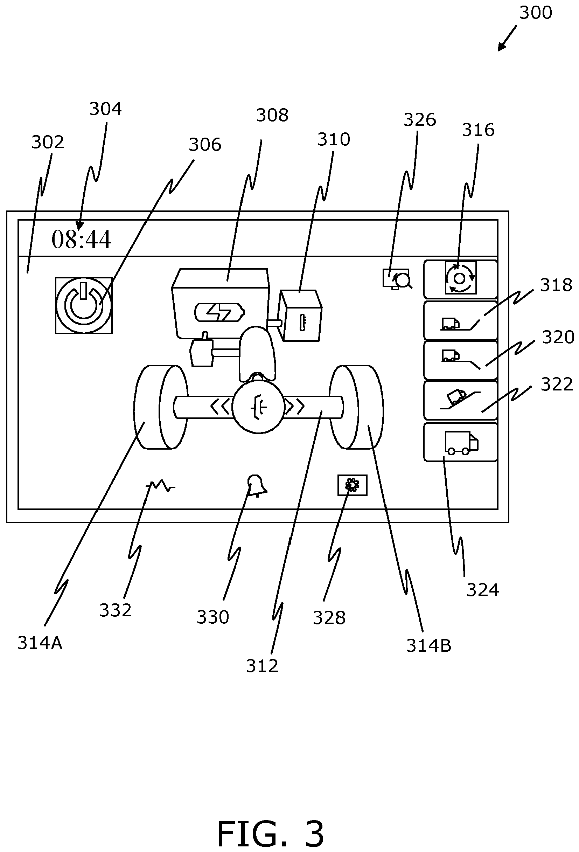

Referring to FIG. 3, is a schematic illustration of user interface **300** located at a towing unit of a truck, in accordance with an embodiment of the present disclosure. As shown, the user interface **300** is design that allows user to interact by touching the screen with fingers or a stylus. The user interface **300** consists of a touch-sensitive display screen **302** that responds to various types of touch inputs, such as taps, swipes, pinches, and multi-finger gestures. The user interface **300** displays a time **304** on the left top corner of the display screen **302.** The user interface **300** comprises an assistance button **306** that is configured to enable or disable the assistance of a second amount of torque from an electric drive. Moreover, the display screen **302** of the user interface **300** depicts a battery level **308** and a temperature level **310** of a battery. When the assistance button **306** is ON, the user interface **300** is configured to visually indicate on the display screen **302** the transfer of the second amount of torque from the electric drive to an assisting axle **312** to wheels **314A** and **314B** of the truck.

Furthermore, the display screen **302** displays various modes from which user can choose based on a traffic data, a road condition data, or a weather data. The display screen **302** shows auto mode **316,** uphill preparation mode **318,** downhill preparation mode **320,** uphill mode **322,** dispatch mode **324.** In the auto mode **316** is an operating mode for all driving situations. In uphill preparation mode **318,** the the electric drive, charges the battery on the upcoming uphill slope. In downhill preparation mode **320,** the the electric drive, discharges the battery on the upcoming downhill. In uphill mode **322,** the electric drive, maximum assistance is provided by the electric drive when driving uphill. In dispatch mode **324,** the the electric drive, assists in the start-up of the truck. Also, the display screen **302,** depicts a status tab **326** to check the status of the electric drive.

The user interface **300,** also displays a service and setting view **328** to adjust the brightness and time **304** of the display screen **302.** The user interface **300,** also displays an event log **330** that on click shows the type of event such as alarm, warning and notice and also allows to clear, write and copy to USB the event events. Also, the display screen **302** displays a diagnostic view tab **332** that on clicking depicts all issues and necessary data of the truck.

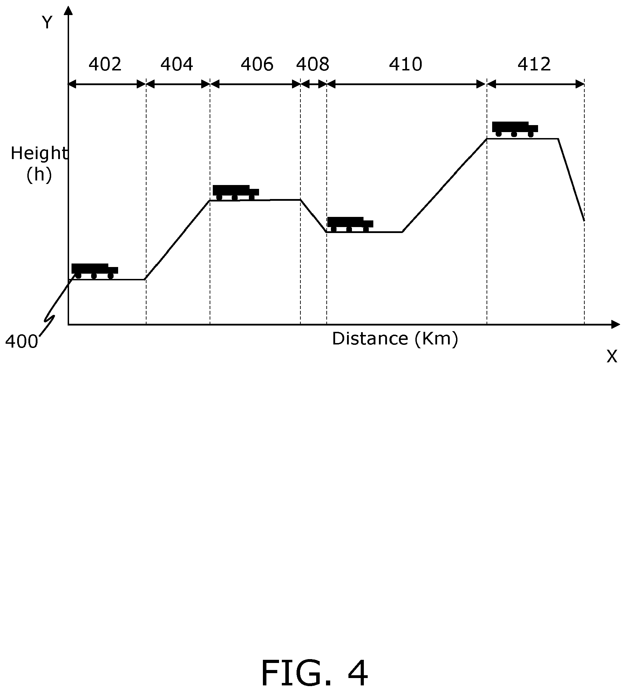

Referring to FIG. 4, illustrated is a graphical representation of a route of a truck **400,** in accordance with an embodiment of the present disclosure. As shown, the distance to travelled by the truck **400** (shown in X-axis) and height of the route (shown in Y-axis). As shown, based on the road profile at least one of the following modes is selected: uphill mode, downhill preparation mode, dispatch mode, uphill preparation mode, downhill mode, coasting mode. As shown, at **402,** the truck is in a dispatch mode as the truck **400** begins to start the journey on the route. In the dispatch mode **402,** an electric drive of the truck **400** provides the additional power (the second amount of torque) needed to initially drive the truck **400.** In this regard, the electric drive provides the second amount of torque as the initial torque. At **404,** the truck **400** moves in the uphill mode. In the uphill mode the electric drive provides maximum assistance to a first engine when driving uphill. At **406,** the truck is moving in the coasting mode, in the coasting mode the truck **400** is moving with a constant speed and the electric drive assists according to need the first engine of the truck **400** to minimize the fuel consumption. At **408** the truck **400** is in the downhill mode during the downhill mode, the electric drive of the truck **400** regenerates to charge a battery of the electric drive. At **410,** the truck **400** is preparing for the upcoming hill in the uphill preparation mode, in such a mode the truck **400** receives maximum torque from the electric drive to assist the first engine to manoeuvre over the hill. At **412** the truck **400** is in the downhill preparation mode, in case of the downhill preparation mode, the electric drive discharges the battery on the upcoming downhill to prevent the battery from overcharging in the downhill (and to have sufficient space for the electricity to be stored during the downhill) and to use remind energy from the battery before downhill.

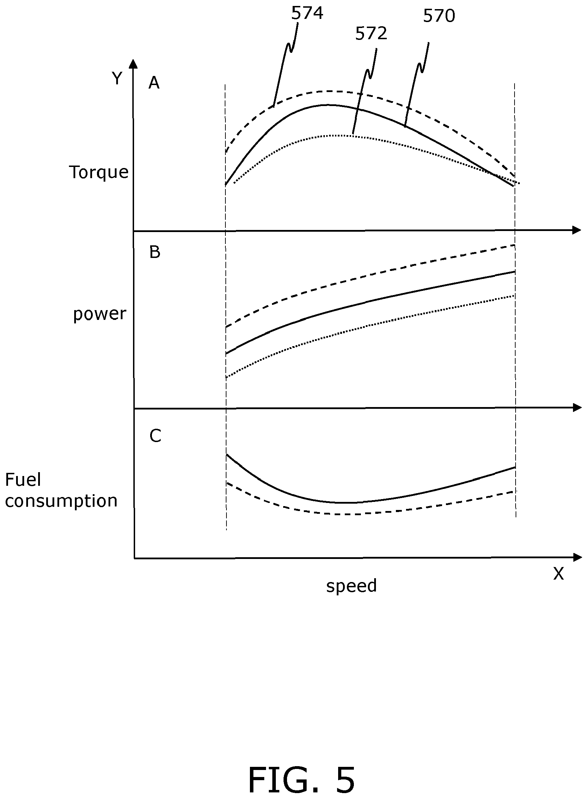

Referring to FIG. 5, there is shown a graph depicting various parameter of a first engine and an electric drive, in accordance with an embodiment of the present disclosure. Herein, horizontal axis (depicted by **X**) of the graph represents a (rotational) speed of the first engine. The first engine speed is transferred as a rotation of a drive axle de and vertical axis (depicted by **Y**) of the graph represents torque **A,** power **B,** and fuel consumption **C.**

As shown in **A,** the first amount of torque **570** produced by the first engine (as depicted by solid line) and a second amount of torque **572** of produced by the electric drive (as depicted by dotted line). Moreover, the total toque **574** produced by the truck (as depicted by dashed line), is the combined torque produced by the electric drive and the first engine. As seen from the graph the total toque torque produced by the truck is higher than the torque produced by the first engine. Furthermore, if a torque request and resulting first amount of torque do not meet then a second amount of torque is provided from the electric drive. This way total torque can be obtained in sufficient level.

As shown in **B,** depicts the powers produced by the truck, the power produced by the first engine (as depicted by solid line) and the power produced by the electric drive (as depicted by dotted line) for the torque generated. Moreover, the total power produced by the truck (as depicted by dashed line), is the combined power produced by the electric drive and the first engine. As seen from the graph the total power torque produced by the truck is higher than the power produced only by the first engine. The combined power helps truck to operate at any terrain and at any weather situation as truck always have power to manoeuvre. As shown in **C,** depicts the fuel consumption by the truck, the fuel consumption by the first engine (as depicted by solid line) when the torque and power is only produced from the first engine. Moreover, the total fuel consumption of the truck (as depicted by dashed line) shows the reduction in the fuel consumption when the electric drive assists the first engine in providing torque and power. This helps the truck to work at high toque and power level with high fuel efficiency.

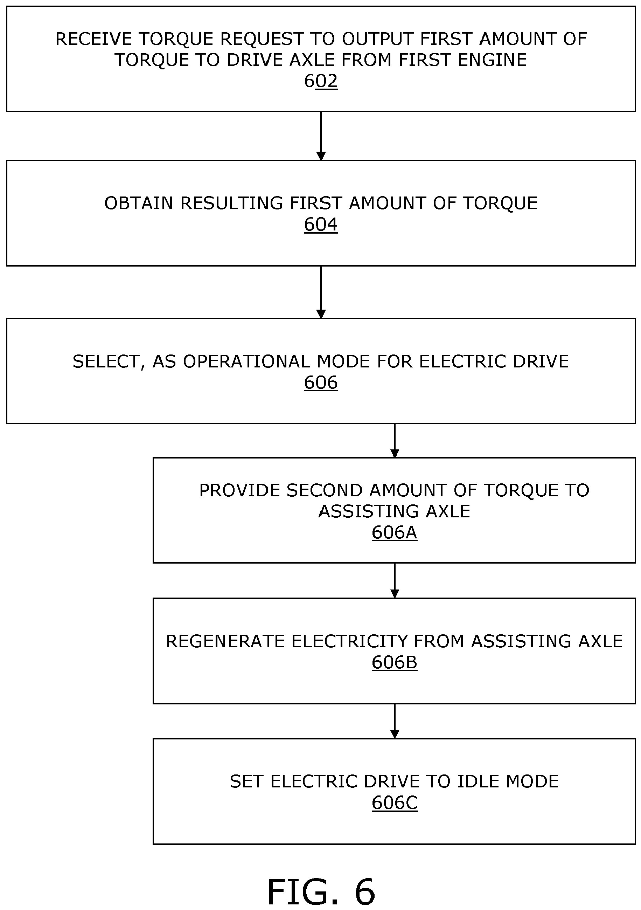

Referring to FIG. 6, there is shown a flowchart of a method illustrating steps for controlling a truck, in accordance with an embodiment of the present disclosure. At step, **602** a torque request is received to output a first amount of torque to a drive axle from a first engine. At step, **604** a resulting first amount of torque is obtained. At step, **606** as operational mode for an electric drive is selected. At step, **606A** a second amount of torque is provided to an assisting axle, wherein the second amount of torque is determined based on a difference between the torque request and the resulting first amount of torque. At step, **606B** an electricity from the assisting axle is generated. At step, **606B** the electric drive is set to an idle mode.

The steps **602, 604** and **606** are only illustrative and other alternatives can also be provided where one or more steps are added, one or more steps are removed, or one or more steps are provided in a different sequence without departing from the scope of the claims herein.

## Claims

1. A trailer (102, 202) couplable to a towing unit (104, 204), the towing unit comprising a first engine (108, 208) configured to output a first amount of torque (570) to a drive axle (106) based on a torque request,
the trailer comprising an electric drive (112, 212) to selectively: (i) provide a second amount of torque (572) to an assisting axle (110, 312), (ii) regenerate electricity from the assisting axle, or to (iii) be in an idle mode,
wherein the second amount of torque is determined based on a difference between the torque request and the first amount of torque, wherein the electric drive (112, 212) is arranged to regenerate electricity from the assisting axle (110, 312) in at least one of following modes: uphill preparation mode (318, 410), downhill mode (408), coasting mode (406), and wherein start of the at least one of the modes is adjusted according to a coefficient of friction (µ) of a road.

2. A trailer according to claim 1, wherein the electric drive is adapted to provide the second amount of torque in at least one of following modes: uphill mode (322, 404), downhill preparation mode (320, 412), dispatch mode (324, 402).

3. A trailer (102, 202) according to any of the preceding claims, wherein the electric drive (112, 212) is in an idle mode when the brake pedal has been applied more than a predefined amount of movement or when a fail-safe mode has been activated manually or automatically.

4. A trailer (102, 202) according to any of the preceding claims, wherein the selection of the mode is based on at least one of the following: a map data, a historical drive data, an actual drive data, a traffic data, a road condition data, or a weather data.

5. A trailer (102, 202) according to any of the preceding claims, wherein the second amount of torque is in maximum less than total braking force of the trailer.

6. A method for controlling a truck (100, 200, 400), wherein the truck comprises a towing unit (104, 204) couplable to a trailer (102, 202), the method comprising:
receiving a torque request to output a first amount of torque to a drive axle (106) from a first engine (108, 208);
obtaining a resulting first amount of torque;
selecting, as operational mode for an electric drive (112, 212), one of:
(A) providing a second amount of torque to an assisting axle (110, 312), wherein the second amount of torque is determined based on a difference between the torque request and the resulting first amount of torque;
(B) regenerating electricity from the assisting axle; or
(C) setting the electric drive to an idle mode,
wherein the electric drive is arranged to regenerate electricity from the assisting axle in at least one of following modes: uphill preparation mode (318, 410), downhill mode (408), coasting mode (406), and wherein start of the at least one of the modes is adjusted according to a coefficient of friction (µ) of a road.

7. A method according to claim 6, wherein the electric drive is adapted to provide the second amount of torque in at least one of following modes: uphill mode (322), downhill preparation mode (320), dispatch mode (324).

8. A method according to any of claims 6-7, wherein the electric drive is in an idle mode when the brake pedal has been applied more than a predefined amount of movement or when a fail-safe mode has been activated manually or automatically.

9. A method according to any of claims 6-8, wherein the modes are selectable via a user interface (300, 206), wherein the user interface is located at the towing unit of the truck.

10. A method according to any of claims 6-9, wherein selection of mode is based on at least one of the following: a map data, a historical drive data, an actual drive data, a traffic data, a road condition data or a weather data.

11. A method according to any of claims 6-10, wherein the amount of electricity regenerated is adjusted according to the coefficient of friction (µ) of the road.

12. A method according to any of claims 6-11, wherein the determination of the second amount of torque is further based on at least one of:
- the speed of the towing unit,
- the mass of the trailer and towing unit,
- the mode,
- the charge level of battery or
- the acceleration or deceleration of the towing unit.

13. A truck (100, 200, 400) comprising a computing system for executing a method according to any of the claims 6-12.

14. A truck (400) according to claim 13, wherein the computing system is formed to a trailer (102, 202).

15. A truck (400) according to claim 14, wherein the computing system uses data received from the towing unit (104, 204) for computing and controlling the usage of the electric drive (112, 212) of the trailer (102, 202).
